# EUROPEAN PATENT APPLICATION

(11) **EP 2 395 783 A1**
(43) Date of publication of application: **14.12.2011**
(21) Application number: 10738563.5
(22) Date of filing: 03.02.2010
(51) Int. Cl.: H04W 24/04, H04B 1/707, H04W 24/10

(54) **MOBILE STATION, WIRELESS COMMUNICATION SYSTEM, METHOD OF DETECTING ABNORMAL CELL ID, AND PROGRAM**

(30) Priority: 04.02.2009 JP 2009024178
(71) Applicant: NEC Corporation, Tokyo 108-8001 (JP)
(72) Inventor: NOMA, Satoshi, Tokyo 108-8001 (JP)
(74) Representative: MacDougall, Alan John Shaw
(86) International application number: PCT/JP2010/051535
(87) International publication number: WO 2010/090232

(57) **Abstract**

A method of detecting an inappropriate cell ID in an environment in which synchronization using reference signals is not ensured in adjacent cells, without employing a method of using a report from an adjacent base station. A mobile station (UE) stores occurrence of an event in which synchronization using a reference signal has been lost with a cell being in a state of call connection, synchronization has been achieved again with a cell having a same cell ID as the cell with which the synchronization has been lost, and then the call connection has been released. The mobile station (UE) notifies occurrence of the event to a base station together with the cell ID when a call connection is subsequently made.

## Description

### TECHNICAL FIELD

### [Reference to Related Application]

This application is based upon and claims the benefit of the priority of Japanese patent application No. 2009-024178 filed on February 04, 2009, the disclosure of which is incorporated herein in its entirety by reference thereto.
The present invention relates to a mobile station, a wireless communication system, an inappropriate cell ID detection method, and a program. More specifically, the invention relates to a mobile station including a function of detecting an inappropriate cell ID in an environment in which synchronization using reference signals is not achieved between adjacent cells, a wireless communication system, an inappropriate cell ID detection method, and a program.

### BACKGROUND ART

There is provided a Physical Cell ID (physical cell ID, hereinafter referred to as a "cell ID") as an identifier for identifying a cell, in LTE (Long Term Evolution). The cell ID in the LTE has a constraint that a set of 504 cell IDs must be repeatedly used due to limitations of the number of bits and the like.

For assignment of cell IDs, the following two requirements need to be satisfied:
a. Adjacent cells should not have a same cell ID.
b. Cells adjacent to a certain cell should not have a same cell ID.
A method of automating cell ID assignment to satisfy the above two requirements has been studied.

This subject of study is referred to as "Automated Configuration of Physical Cell ID" in 3GPP.

As methods of satisfying the two above-mentioned requirements, the following two approaches may be considered:
1. an arrangement which satisfies the above-mentioned two requirements;
2. detection (detection of Physical Cell ID Collision: refer to Non-patent Document 1) when, unfortunately, the two requirements have been not satisfied.

Herein, attention will be focused on the detection when, unfortunately, the two requirements have not been satisfied. As a method of the detection of this situation, the following two methods may be considered:
(1) use of a report from a mobile station (User Entity, hereinafter abbreviated as a UE) to a base station;
(2) use of a report from an adjacent base station.

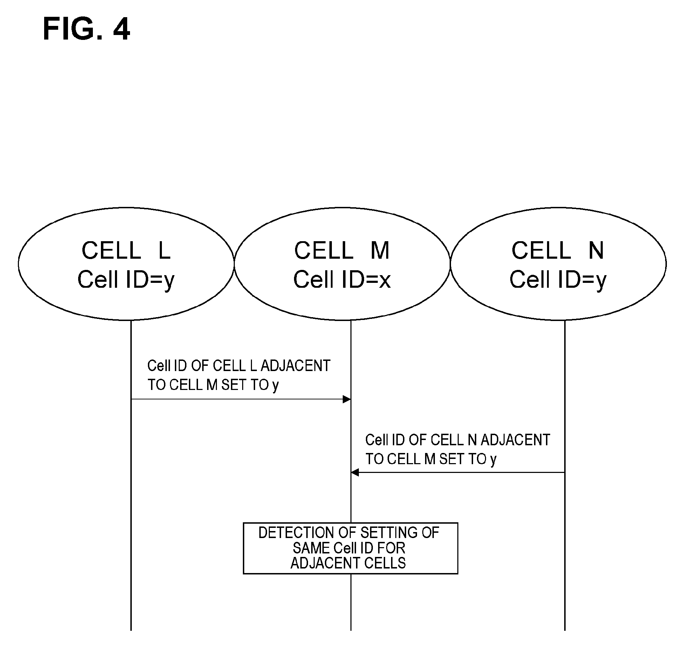

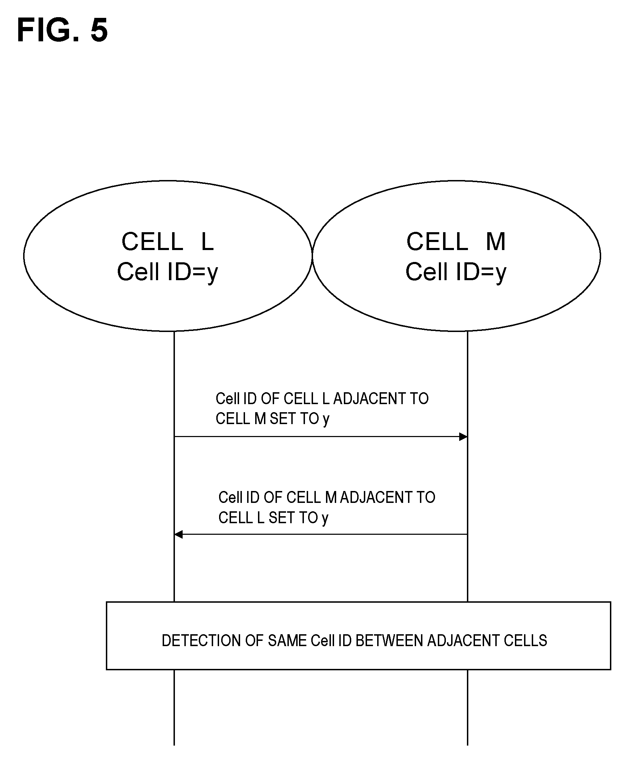

Fig. 4 shows a sequence when setting of a cell ID that does not satisfy the above-mentioned requirement b has been detected, using the method (2). Fig. 5 shows a sequence when setting of a cell ID that does not satisfy the above-mentioned requirement a has been detected, using the method (2). As described above, by using a report from an adjacent base station, setting of cell IDs that do not satisfy the above-mentioned two requirements can be detected.

The method (2) of using a report from an adjacent base station can be adopted only when there is a communication network for reporting about adjacent cell IDs to each other.

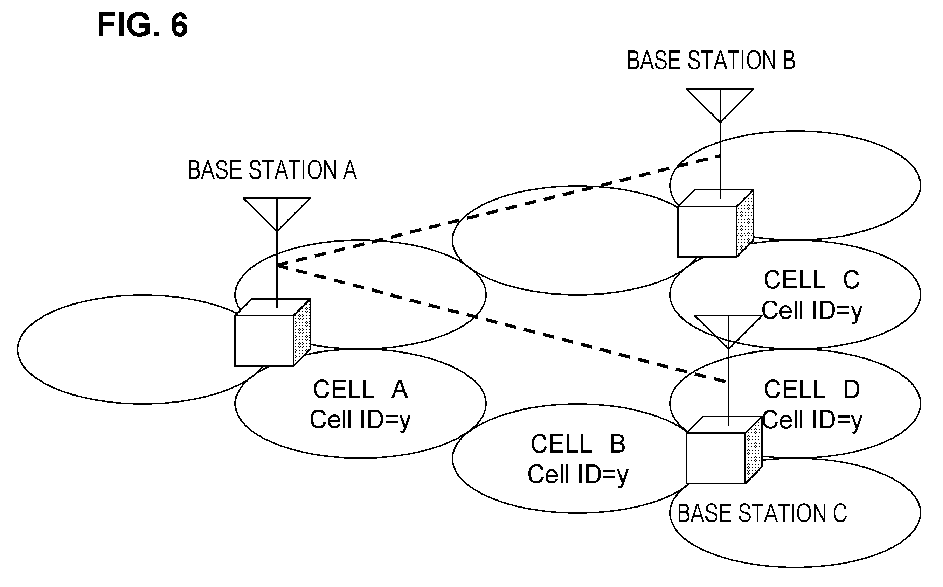

Assume that there is a communication line (indicated by a broken line in Fig. 6) between base stations A and B and there is a communication line (indicated by a broken line in Fig. 6) between the base station A and a base station C, as shown in Fig. 6, for example. Setting of the same cell ID for cells A and B can be reported to each other. However, there is no communication line between the base stations B and C. Thus, there is no way of detecting setting of a same cell ID for cells C and D.

Non-patent Document 2 proposes a method of detecting setting of a same cell ID using a report from a UE to a base station in the above-mentioned method (1). The method of detecting setting of a same cell ID proposed in Non-patent Document 2 will be described below, using Fig. 7.

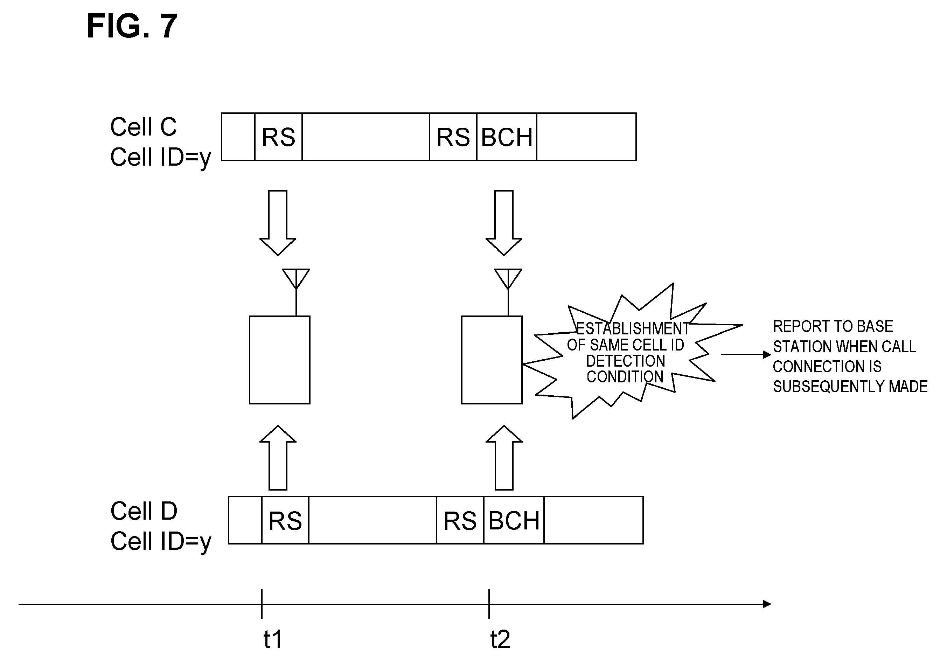

Referring to Fig. 7, a cell C periodically transmits a reference signal (Reference Signal; hereinafter referred to as an "RS"). A cell D is a cell for which a cell ID that is the same as for the cell C is set, and periodically transmits the RS, in synchronization with the cell C. In the LTE, the RS is a signal to which a frequency band of 180 kHz is assigned, which is transmitted 8 times per 1 ms, and which is used for measuring reception quality by the UE. It is assumed that the cells C and D are in a state of synchronization in which each of the cells C and D transmits the same signal at a same time, as shown in Fig. 7.

The UE in the zone of the cell C demodulates and decodes a different received signal which has been modulated, encoded, and transmitted based on the reception quality determined by the RS reported by the UE to the base station.

The RS is allocated to a frequency unique to the cell ID. Further, the RS comprises a code unique to the cell ID. Accordingly, the UE cannot make distinction between the RSs transmitted from two cells having the same cell ID except for a reception time.

Each of the cells C and D periodically transmits broadcast information through a BCH (Broadcast CHannel). This broadcast information includes information unique to each cell. The broadcast information includes information on regulation, wireless channel setting, and the like even if the same ID is set for a plurality of cells. The broadcast information transmitted from the cells C and D in Fig. 7, for example, may include information that is different between the cells C and D.

Accordingly, the UE can receive the RS transmitted from each of the cell C and the cell D at a same time (t1), and can receive the broadcast information transmitted from each of the cell C and the cell D at a same time (t2), respectively.

Assume that an RS transmission time in a certain cell is set to T_RS_x, an RS transmission time in the cell C can be indicated by T_RS_c = T_offset_c + n*T_RS_period. When the cell C is synchronized with the cell D, T_offset_d = T_offset_c holds. Thus, the RS transmission times of the cells C and D match (T_RS _d = T_RS_c).

Herein, T_offset_x indicates an RS transmission offset value in the cell X, n indicates the number of times of RS transmissions, and T_RS_period indicates an RS transmission interval. The number of times of RS transmissions n and the RS transmission interval T_RS_period are unique, irrespective of the cell.

In this case, received power of the UE becomes larger than in a case where the UE has received the RS from one cell. It is because a space diversity effect, in which the same RSs are received from different cells at a same time, can be obtained.

On the other hand, content of the broadcast information differs between the cell C and the cell D. For that reason, even if the UE receives the broadcast information, the UE cannot know content of each signal due to interference. Occurrence of an event, in which decoding of the broadcast information has failed although the RS received power is higher than usual as described above, is set to a same cell ID detection condition. The UE stores the same cell ID detection condition.

Then, when call connection can be normally made, the UE notifies the content of storage to the base station. With this arrangement, the base station knows that the already-mentioned requirements a and b are not satisfied in the vicinity of the cells (that are not necessarily adjacent) about which the base station has received the report.

### PRIOR ART DOCUMENT

### NON-PATENT DOCUMENT

Non-patent Document 1:
   3GPP RAN WG2, R1-075099, "Response to LS on Physical-layer Cell Identity Collision", [online], "searched on January 29, 2009], Internet <URL:http://www.3gpp.org/ftp/tsg_ran/WG1_RL1/TSGR1_51/Docs/R1-075099. zip>
Non-patent Document 2:
   3GPP RAN WG2, R2-085380, "UE-assisted heuristic detection of PCI collision", [online], [searched on January 29 in 2009], Internet <URL:http://www.3gpp.org/ftp/tsg_ran/WG2_RL2/TSGR2_63bis/Docs/ R2-085380. zip>

### SUMMARY OF THE INVENTION

### PROBLEMS TO BE SOLVED BY THE INVENTION

The entire disclosures of Non-patent Documents listed above are incorporated herein by reference thereto. The following analyses are given by the present invention.
The same cell ID detection method in Non-patent Document 2 listed above, however, has the following problems. The primary problem is that a same cell ID cannot be detected in a state of inter-cell asynchronization, because the same cell ID method in Non-patent Document 2 is based on the premise of synchronization between cells.

The inter-cell asynchronization denotes a state in which the RS transmission times (timings) of cells do not match. When the cell C is asynchronized with the cell D, the RS transmission offset value T_offset_d of the cell D does not match the RS transmission offset value T_offset_c of the cell C. Thus, the RS transmission times (timings) T_RS_d and T_RS_c do not match.

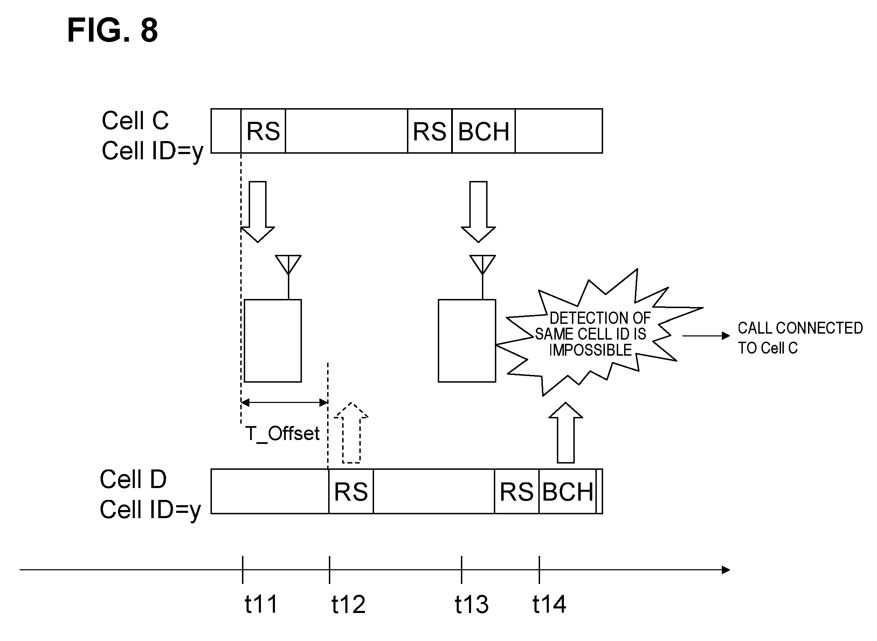

The reason why a same cell ID cannot be detected by the method in Non-patent Document 2 in the state of the inter-cell asynchronization as described above will be explained, using Fig. 8.

The UE receives and decodes the broadcast information on the cell C at a time t13, being triggered by reception of the RS of the cell C transmitted earlier at a time t11. Then, the UE is call-connected to the cell C.

On the other hand, since the transmission time of the RS of the cell D is different from the RS transmission time of the cell C, the diversity effect cannot be obtained with respect to the two RSs.

The broadcast information transmission time (t14) of the cell D is different from the broadcast information transmission time (t13) of the cell C. Thus, the UE can receive the broadcast information on the cell C without suffering interference.

Accordingly, in the case of the inter-cell asynchronization, the same cell ID is not reported by the UE according to the same cell ID detection method in Non-patent Document 2 listed above.

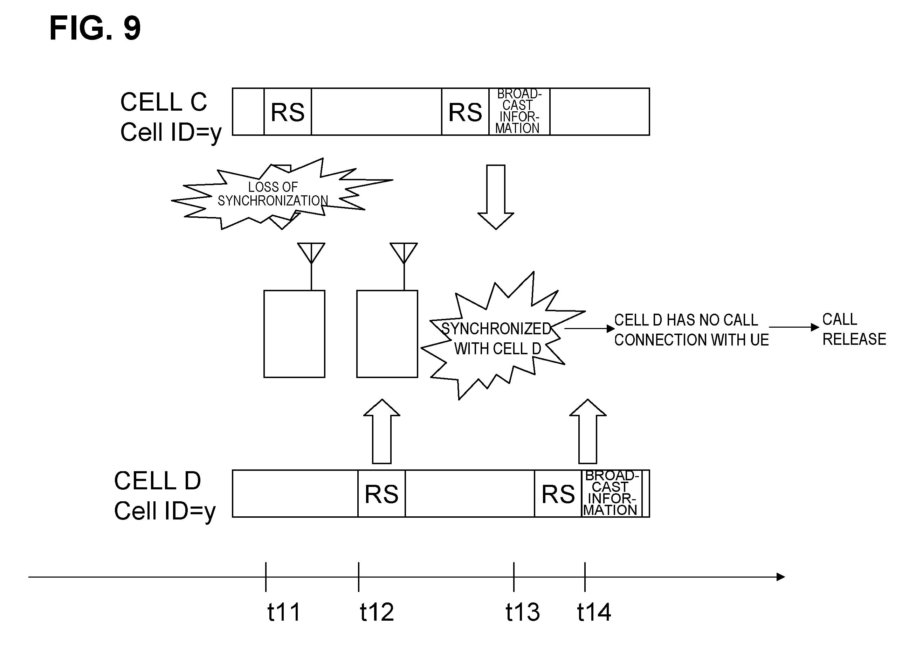

On the other hand, when a same cell ID is set in the state of the inter-cell asynchronization, a unique event as described below occurs. This unique event will be explained, using Figs. 8 and 9.

Assume that the UE is call-connected to the cell C, as shown in Fig. 8, and the UE is synchronized with the cell C. Synchronization between the UE and the cell means that an actual RS reception time matches an RS reception time expected by the UE.

Then, it is assumed that the UE loses synchronization with the cell C (loss of synchronization in Fig. 9) due to some reason such as deterioration of a line of sight between the UE and the base station, passage of the UE through a location in which a lot of interferences are present, or the like.

Usually, the UE should receive the RS transmitted next from the cell C shown in an upper stage of the page of Fig. 9. The UE, however, detects the same RS transmitted earlier from the cell D, and is then synchronized with the cell D.

On the other hand, originally, the UE is not call-connected to the cell D. Thus, the cell-connection cannot be subsequently maintained between the UE and the cell D. Thus, call release occurs.

It is an object of the present invention to provide a method capable of detecting setting of a same cell ID in a state of inter-cell asynchronization, using the above-mentioned unique event in the inter-cell asynchronization.

### MEANS TO SOLVE THE PROBLEMS

According to a first aspect of the present invention, there is provided a mobile station capable of reporting an inappropriate (or abnormal) cell ID in an environment in which synchronization using reference signals is not ensured between adjacent cells. This mobile station comprises:
means (storage unit) for storing occurrence of an event in which synchronization using a reference signal has been lost with a cell being in a state of call connection, synchronization has been achieved again with a cell having a same cell ID as the cell with which the synchronization has been lost, and then the call connection has been released; and
means (call processing unit) for notifying to a base station occurrence of the event together with the cell ID, when a call connection is subsequently made.

According to a second aspect of the present invention, there is provided an inappropriate cell ID detection method, the method comprising the steps of:
storing occurrence of an event in which synchronization using a reference signal has been lost with a cell being in a state of call connection, synchronization has been achieved again with a cell having a same cell ID as the cell with which the synchronization has been lost, and then the call connection has been released; and
notifying to a base station occurrence of the event together with the cell ID, when the call connection is subsequently made;
wherein the notifying the inappropriate cell ID is performed in an environment in which synchronization using reference signals is not ensured between adjacent cells.

According to a third aspect of the present invention, there is provided a program of notifying an inappropriate cell ID, the program causing a computer to execute the processes of:
storing occurrence of an event in which synchronization using a reference signal has been lost with a cell being in a state of call connection, synchronization has been achieved again with a cell having a same cell ID as the cell with which the synchronization has been lost, and then the call connection has been released; and
notifying to a base station occurrence of the event together with the cell ID, when a call connection is subsequently made;
wherein the notifying the inappropriate cell ID is performed in an environment in which synchronization using reference signals is not ensured between adjacent cells.

### MERITORIOUS EFFECTS OF THE INVENTION

According to the present invention, without employing a method of using a report from an adjacent base station, an inappropriate cell ID can be detected by using a mobile station, in an environment in which synchronization using reference signals is not achieved between adjacent cells.

### BRIEF DESCRIPTION OF THE DRAWINGS

Fig. 1 is a diagram for explaining an overview of the present invention;
Fig. 2 is a block diagram showing configurations of a mobile station (UE) and a base station in a first exemplary embodiment of the present invention;
Fig. 3 is a sequence diagram showing operations of the mobile station (UE) and base stations in the first exemplary embodiment of the present invention;
Fig. 4 is a diagram for explaining an inappropriate cell ID detection method using reports from adjacent base stations;
Fig. 5 is another diagram for explaining the inappropriate cell ID detection method using a report from an adjacent base station;
Fig. 6 is a diagram for explaining a case where the inappropriate cell ID detection method using a report from an adjacent base station cannot be used;
Fig. 7 is a diagram for explaining an inappropriate cell ID detection method in Non-patent Document 2;
Fig. 8 is a diagram for explaining a case where an inappropriate cell ID is not detected by the inappropriate cell ID detection method in Non-patent Document 2; and
Fig. 9 is a diagram for explaining a unique event in an environment where synchronization using reference signals is not achieved between adjacent cells.

### MODES FOR CARRYING OUT THE INVENTION

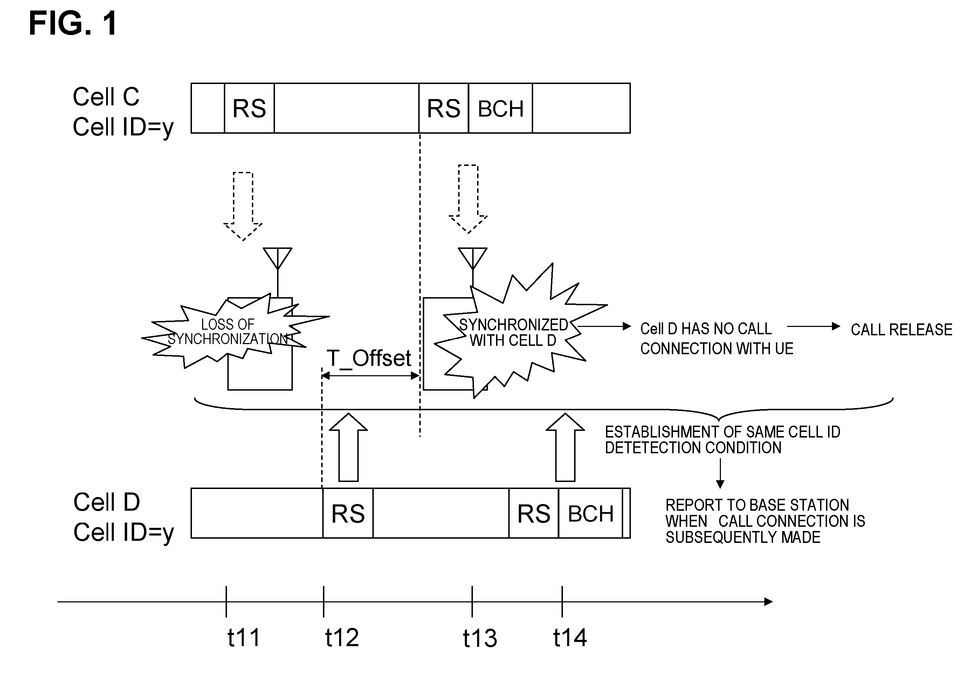

First, an overview of the present invention will be described with reference to Fig. 1. As described above, in an environment where cells are asynchronous, a UE which is call-connected to and is synchronized with one cell (cell C in Fig. 1 having a cell ID of y) cannot be synchronized with the cell (cell C in Fig. 1) for some reason (which is a loss of synchronization shown in Fig. 1). The UE subsequently achieves synchronization by receiving an RS from another cell (cell D in Fig. 1) having the same cell ID (cell ID = y). The call connection is, however, released from the another cell (establishment of a same cell ID detection condition in Fig. 1). The UE stores occurrence of the above event in a storage device thereof.

Then, when the UE is next call-connected to an arbitrary cell, for example, the UE reports occurrence of the event together with the cell ID to the base station.

With the above-mentioned arrangement, the inappropriate cell ID (for which the above-mentioned condition a or b is not satisfied) can be detected in an environment of asynchronization of RSs between adjacent cells. Specifically, it can be detected that the above-mentioned condition a or b is not satisfied in the cell around the cell of the base station having the cell ID of y in a cell arrangement.

### [First Exemplary Embodiment]

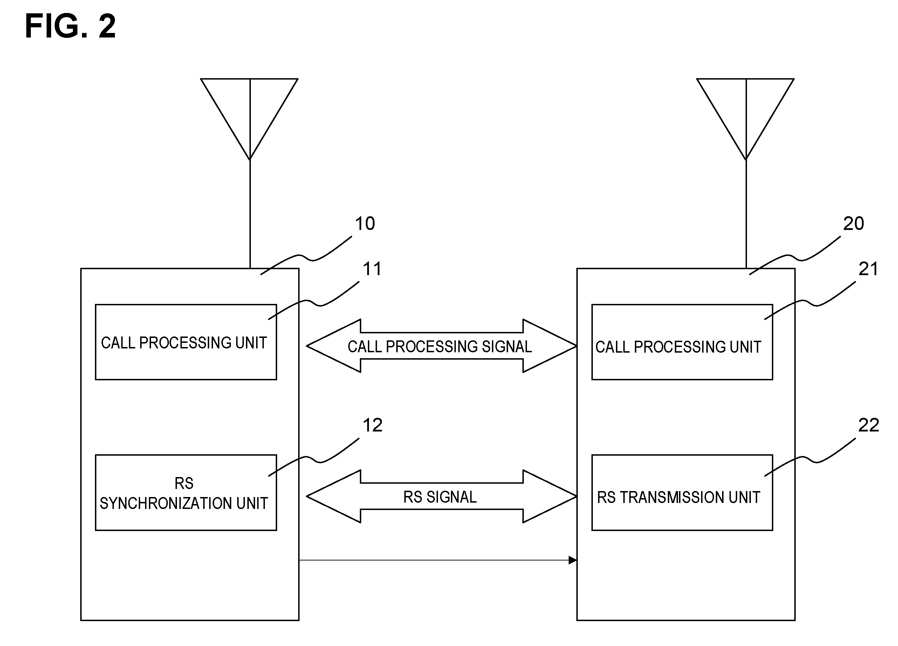

Next, a first exemplary Embodiment of the present invention will be described in detail with reference to a drawing. Fig. 2 is a block diagram showing configurations of a mobile station (UE) and a base station according to the first exemplary embodiment of the present invention.

Referring to Fig. 2, a mobile station (UE) 10 in the first exemplary embodiment of the present invention includes a call processing unit 11 and an RS synchronization unit 12.

The call processing unit 11 performs signal transmission and reception for being call-connected to a cell (base station). Further, the call processing unit 11 stores in a memory omitted for illustration a cell ID due to which an event for establishing a same cell ID detection condition has occurred, when the same cell ID detection condition has been established. The same cell ID detection condition will be described later. Next, the call processing unit 11 provides a report indicating that the same cell ID has been detected in a specific cell to a base station 20, when a call-connection has been subsequently made again.

The same cell ID detection condition is established due to occurrence of the following phenomena (1) to (3):
(1) a loss of synchronization with a cell being in a state of call connection using a reference signal;
(2) subsequent achievement of synchronization with a cell having the same ID as the cell concerned (i.e., the cell with which the synchronization has been lost); and
(3) subsequent call (connection) release from the cell having the same ID.

The RS synchronization unit 12 receives an RS and checks whether or not synchronization between the UE and a cell is achieved. When the synchronization between the UE and the cell is achieved, and when the synchronization between the UE and the cell is lost, the RS synchronization unit 12 notifies each of the achievement of the synchronization and the loss of the synchronization to the call processing unit 11.

The base station 20 includes a call processing unit 21 and an RS transmission unit 22.

The call processing unit 21 performs signal transmission and reception for being call-connected to the UE 10. The RS transmission unit 22 performs transmission of the RS according to settings of a cell ID, transmission offset of the RS, transmission interval of the RS, and frequency allocation of the RS.

Other configurations of the UE and the base station in Fig. 2 described above are well known to those skilled in the art, and are not directly related to the present invention. Accordingly, details of the configurations will be omitted.

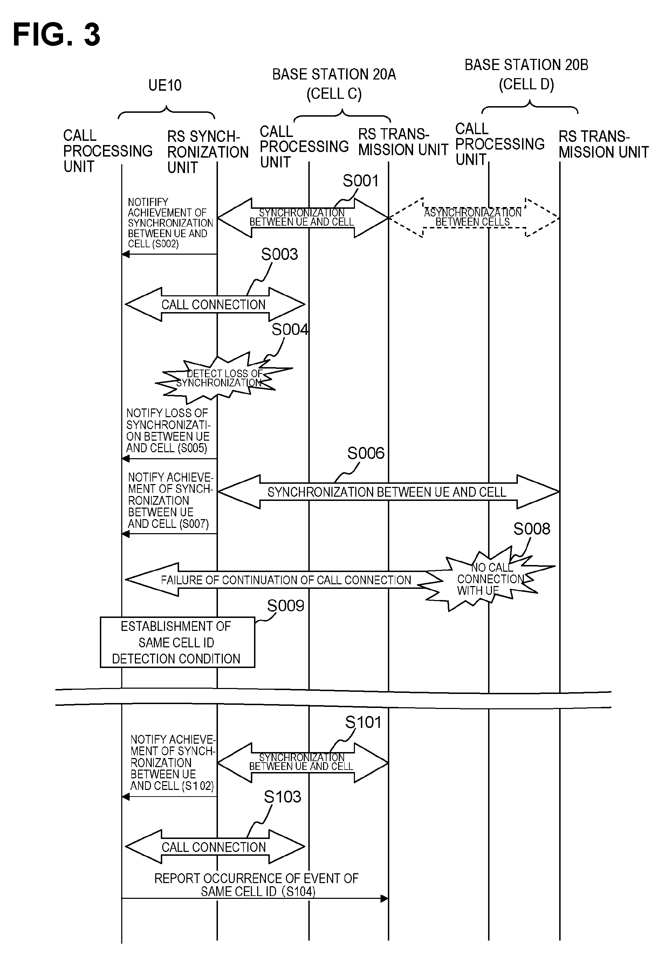

Next, operation of this exemplary embodiment will be described in detail with reference to drawings. Fig. 3 is a sequence diagram showing operations of the mobile station (UE) and base stations according to the first exemplary embodiment of the present invention. It is assumed in the following description that a same cell ID (in which the cell ID is set to y) has been set to a cell C under control of a certain base station (base station 20A) and a cell D under control of another base station (base station 20B), and that the cell C and the cell D are in the relationship of inter-cell asynchronization in which the RS of the cell C and the RS of the cell D are not synchronous.

Referring to Fig. 3, the RS synchronization unit 12 of the UE 10 receives the RS transmitted from the cell C, so that the UE 10 is synchronized with the cell C (in step S001).

Next, the RS synchronization unit 12 of the UE 10 notifies achievement of synchronization between the UE and the cell to the call processing unit 11 of the UE 10 (in step S002). This notification includes the cell ID.

Next, a signal related to call connection is transmitted and received between the call processing unit 11 of the UE 10 which has received the notification and a call processing unit 21 of a base station 20A, so that the UE is call-connected to the base station 20A (in step S003).

When the RS cannot be normally received for some reason, the RS synchronization unit 12 of the UE 10 detects a loss of the synchronization between the UE and the cell C (in step S004).

When the loss of the synchronization between the UE and the cell C is detected, the RS synchronization unit 12 of the UE 10 notifies the loss of the synchronization between the UE and the cell to the call processing unit 11 of the UE 10 (in step S005).

Next, the RS synchronization unit 12 of the UE 10 detects the RS from the cell D, so that the UE 10 is synchronized with the cell D (in step S006). Based on the assumption that the cell C and the cell D should have the same cell ID, the RS from the cell D is the same as the RS from the cell C except for the transmission time (timing) of the RS (due to the transmission offset of the RS). Ideally, the RS of the cell C should be detected, and the UE10 should be synchronized with the cell C again. However, due to the different transmission offset of the RS, the RS of the cell D which has been detected first is received.

In this case, the RS synchronization unit 12 of the UE 10 also notifies achievement of synchronization between the UE and the cell to the call processing unit 11 of the UE 10 (in step S007). This notification includes the cell ID. Since the cell C and the cell D have the same cell ID, the UE 10 cannot distinguish whether the synchronized cell be the cell C or the cell D.

Next, the call processing unit 11 of the UE 10 which has received the notification attempts to maintain the call connection to the call processing unit 21 of the base station 20B. However, the cell D has no call-connection with the UE 10. Thus, continuation of the call connection fails, and a call release occurs (in step S008).

The call processing unit 11 of the UE 10 stores occurrence of the event from step S004 to S008 described above, that is, a temporary loss of synchronization with the cell C having the cell ID = y and the call release though the synchronization between the UE and the cell has been achieved (in step S009: establishment of same cell ID detection condition).

Thereafter, the RS synchronization unit 12 of the UE 10 receives the RS transmitted from the cell C, so that the UE 10 is synchronized with the cell C (in step S101). The cell which is synchronized with the UE 10 may be the cell D or a different cell besides the cell C.

Next, the RS synchronization unit 12 of the UE 10 notifies achievement of synchronization between the UE and the cell to the call processing unit 11 of the UE 10 (in step S102).

Next, the signal related to the call connection is transmitted and received between the call processing unit 11 of the UE 10 which has received the notification and the call processing unit 21 of the base station 20A, so that the UE is call-connected to the base station 20A (in step S103).

Finally, the call processing unit 11 of the UE 10 reports the content stored in step S009 (establishment of the same cell ID detection condition in the cell having a cell ID of x [sic. y]) to the call processing unit 21 of the base station 20A (in step S104).

With the above arrangement, the base station 20A comes to know that the condition a or b mentioned earlier is not satisfied in the cell around the cell of the base station 20A having the cell ID of x [sic. y].

With the arrangement described above, presence of a cell for which a same cell ID has been set can be stored and can be later reported to the base station in the environment of inter-cell asynchronization, in this exemplary embodiment.

The above description was given to the preferred exemplary embodiment of the present invention. The present invention is not, however, limited to the exemplary embodiment described above. Further variations, substitutions, and adjustments may be added within a scope without departing from the basic technical concept of the present invention. The above-mentioned mobile station (UE) in the first exemplary embodiment, for example, may be also provided with the same cell ID detection function disclosed in Non-patent Document 2. With this arrangement, a mobile station capable of detecting setting of a same cell ID by occurrence of a certain event can be obtained, irrespective of whether synchronization between cells is achieved.
Modifications and adjustments of an example any embodiment and an example are possible within the scope of the overall disclosure (including claims) of the present invention, and based on the basic technical concept of the invention. Various combinations and selections of various disclosed elements are possible within the scope of the claims of the present invention. That is, the present invention of course includes various variations and modifications that could be made by those skilled in the art according to the overall disclosure including the claims and the technical concept.

### EXPLANATION OF SYMBOLS

- 10: mobile station (UE)
- 11: call processing unit
- 12: RS synchronization unit
- 20: base station
- 21: call processing unit
- 22: RS transmission unit

## Claims

1. A mobile station comprising:
means for storing occurrence of an event in which synchronization using a reference signal has been lost with a cell being in a state of call connection, synchronization has been achieved again with a cell having a same cell ID as the cell with which synchronization has been lost, and then the call connection has been released; and
means for notifying to a base station occurrence of the event together with the cell ID, when a call connection is subsequently made.

2. The mobile station according to claim 1, wherein
said event, that is, "the event in which synchronization using a reference signal has been lost with a cell being in a state of call connection, synchronization has been achieved again with a cell having a same cell ID as the cell with which synchronization has been lost, and then the call connection has been released", occurs by a following occurrence that the mobile station has been call-connected to a cell of a first base station due to synchronization using a reference signal transmitted from a first one of two base stations for which the same cell ID is set and which transmit the same reference signals;
the synchronization has been lost with the cell of the first base station; and then
call release has occurred from a second one of the two stations after achievement of synchronization with a cell of a second base station using a reference signal transmitted from the second base station.

3. A mobile station comprising:
a call processing unit which performs signal transmission and reception for being call-connected to a cell; and
a reference signal reception unit which notifies to the call processing unit whether or not synchronization with the cell is achieved, based on a reference signal received from the cell; wherein
when the following conditions (1) to (3) are established, the mobile station stores a cell ID in a memory, and then notifies the cell ID and setting of the cell ID to an arbitrary base station upon subsequent call-connection with the base station :
(1) a loss of synchronization with the cell being in a state of call connection using the reference signal,
(2) subsequent achievement of synchronization with a cell having the ID that is the same as the cell with which the synchronization has been lost, and
(3) subsequent call release from the cell having the same ID;
and wherein said mobile station can report an inappropriate cell ID in an environment in which synchronization using reference signals is not ensured between adjacent cells.

4. The mobile station according to any one of claims 1 to 3, further comprising a function of storing occurrence of a second event in which received power of the reference signal has exceeded a predetermined threshold value and decoding of broadcast information has failed, and notifying to the base station occurrence of the second event together with the cell ID when a call connection is subsequently made.

5. A wireless communication system including the mobile station according to any one of claims 1 to 4.

6. An inappropriate cell ID detection method comprising the steps of:
storing occurrence of an event in which synchronization using a reference signal has been lost with a cell being in a state of call connection, synchronization has been achieved again with a cell having a same cell ID as the cell with which the synchronization has been lost, and then the call connection has been released; and
notifying to a base station occurrence of said event together with the cell ID, when the call connection is subsequently made, wherein
said notifying the inappropriate cell ID is performed in an environment in which synchronization using reference signals is not ensured between adjacent cells.

7. A program of notifying an inappropriate cell ID the program causing a computer to execute the processes of:
storing occurrence of an event in which synchronization using a reference signal has been lost with a cell being in a state of call connection, synchronization has been achieved again with a cell having a same cell ID as the cell with which the synchronization has been lost, and then the call connection has been released; and
notifying to a base station occurrence of said event together with the cell ID, when a call connection is subsequently made; wherein
said notifying the inappropriate cell ID is performed in an environment in which synchronization using reference signals is not ensured between adjacent cells.
